# EUROPÄISCHE PATENTSCHRIFT

(11) **EP 1 618 986 B1**
(45) Veröffentlichungstag und Bekanntmachung des Hinweises auf die Patenterteilung: **04.08.2010**
(21) Anmeldenummer: 05105441.9
(22) Anmeldetag: 21.06.2005
(51) Int. Cl.: B23P 6/00, F01D 5/00, B23P 15/00, B23K 26/42

(54) **Verfahren und Reparatur-Schaufelteil zur BLISK-Reparatur oder zur Neuherstellung von BLISKs**
Method and repair blade piece for repairing or manufacturing of BLISKs
Procédé et pièce de réparation d'aube pour la réparation ou la fabrication des BLISKs

(30) Priorität: 30.06.2004 DE 102004032461
(43) Veröffentlichungstag der Anmeldung: 25.01.2006
(73) Patentinhaber: Rolls-Royce Deutschland Ltd & Co KG, 15827 Blankenfelde-Mahlow (DE)
(72) Erfinder: Mielke, Rainer, 61440 Oberursel (DE); Johann, Erik, 12103 Berlin (DE)
(74) Vertreter: Wablat, Wolfgang

(56) Entgegenhaltungen:
- EP-A1- 0 511 022
- EP-A1- 0 596 796
- EP-A1- 0 638 387
- EP-A2- 1 138 431
- US-B1- 6 568 077

## Beschreibung

Die Erfindung betrifft ein Verfahren zur BLISK-Reparatur, bei dem der beschädigte Schaufelabschnitt abgetrennt und mittels Schweißverbindung durch ein neues Schaufelteil in entsprechender Form und Größe ersetzt wird, sowie ein Reparatur-Schaufelteil zur Durchführung des Verfahrens. Ein solches Verfahren und ein solches Reparatur-Schaufelteil sind aus EP-A1-0 596 796 bekannt. Die Erfindung bezieht sich darüber hinaus auch auf die Neuherstellung von BLISKs.

Die Verdichter von Flugzeugtriebwerken sind in vielen Fällen als BLISK, bei der die Rotorschaufeln integral mit der Rotorscheibe geformt sind, ausgebildet. Gegenüber den Verdichtern mit separat gefertigten und an der Rotorscheibe lösbar angebrachten Verdichterschaufeln sind die einstückigen BLISKs insofern von Vorteil, als diese mechanisch höher belastbar sind. Daraus ergeben sich positive Folgewirkungen, beispielsweise in bezug auf das Gewicht und die Leistung des Triebwerks.

Die Verdichterschaufeln von Flugzeugtriebwerken unterliegen bekanntermaßen im Bereich der Oberkante und - bei einem hohen Anteil in der Luft befindlicher Sandkörnchen - auch in einem von der Oberkante zur Hinterkante reichenden Abschnitt einem erheblichen Strömungsverschleiß. Darüber hinaus kann insbesondere die Schaufelvorderkante durch größere Objekte, aber auch schon durch kleine Steinchen, beschädigt werden. Sofern die Rotorschaufeln separat hergestellt und lösbar an der Rotorscheibe befestigt sind, können die beschädigten oder verschlissenen Schaufeln auf relativ einfache Weise durch neue ausgetauscht werden. Dieses zwar vorteilhafte, aber kostenaufwendige Verfahren ist bei nach der BLISK-Technologie hergestellten Verdichtern mit einstückig an die Rotorscheibe angeformten Rotorschaufeln nicht möglich.

Bei einem aus der US 6 5768 077 bekannten Verfahren zur Reparatur von beschädigten BLISKs wird ein bestimmter Bereich der Vorder- oder Hinterkante der beschädigten Rotorschaufeln in Abhängigkeit von den zuvor ermittelten Spannungslinien so herausgeschnitten, dass der Ausschnitt sich im Abstand von den Bereichen maximaler Spannung in der Schaufel befindet. Anschließend wird die herausgeschnittene Ausnehmung mit in einem geeigneten Schweißverfahren aufgebrachten mehreren Schweißlagen wieder aufgefüllt und danach spanend bearbeitet. Gemäß einem noch anderen Verfahrensmerkmal kann an der Kante der Ausnehmung ein individuell vorgefertigtes Einsatzteil, das in Form und Größe dem herausgeschnittenen Abschnitt entspricht, in der richtigen Lage zunächst durch Schweißen angeheftet oder durch geeignete Vorrichtungen positioniert werden und in einem darauffolgenden Schweißprozess fest mit der Schaufel verbunden werden. Sowohl die BLISK-Reparatur durch individuelles Abtrennen und anschließendes mehrlagiges Schweißen als auch die individuelle Herstellung des jeweiligen Einsatzstückes und dessen manuelle lagerichtige Anordnung und Fixierung in dem zwischen den Schaufeln nur begrenzt zur Verfügung stehenden Raum sind aufwendig. Qualitätsmängel bei der BLISK-Reparatur sind daher nicht ausgeschlossen. Zudem ist der Aufwand für die technische Bewertung der Qualität der reparierten Schaufeln bzw. BLISKs hoch.

Aus der EP-A1-0596796 ist ein Verfahren zum Verschweißen von Schaufelblättern mit einer an eine Scheibe angeformten Schaufelfüßen bekannt. Am unteren Ende des jeweils anzuschweißenden Schaufelblattes ist eine Befestigungsleiste angeformt, um das Schaufelblatt punktförmig am Schaufelfuß abzustützen. Zum Positionieren und Verklemmen des Schaufelblattes am Schaufelfuß sowie zum Abschirmen benachbarter Schaufeln sind separat angeordnete Klemm-, Stütz- und Abschirmelemente vorgesehen.

Der Erfindung liegt die Aufgabe zugrunde, den Arbeits- und Kostenaufwand bei der BLISK-Reparatur zu senken und ein dementsprechendes Verfahren und Mittel zu dessen Durchführung anzugeben, das zudem auch bei der Neuherstellung von BLISKs angewendet werden kann.

Erfindungsgemäß wird die Aufgabe mit einem Verfahren gemäß den Merkmalen des Patentanspruchs 1 sowie einem nach den Merkmalen des Patentanspruchs 3 ausgebildeten Reparatur-Schaufelteil zur Durchführung des Verfahrens gelöst. Aus den Unteransprüchen ergeben sich vorteilhafte Weiterbildungen und zweckmäßige Ausgestaltungen der Erfindung.

Der wesentliche Erfindungsgedanke besteht darin, dass die beschädigten Schaufelblätter oberhalb des Schaufelfußes bis auf einen verbleibenden Schaufelstumpf vollständig abgetrennt werden, und zwar in einem für den jeweiligen Schaufeltyp spezifischen, zuvor ermittelten, entlang einer Knotenlinie schwingungsfreien oder schwingungsarmen Bereich. Entsprechend der somit bereits vorher bekannten Größe des abgetrennten Schaufelabschnittes werden standardisierte Reparatur-Schaufelteile vorgefertigt, die ein neues Schaufelteil in der bekannten Form und Größe des abzutrennenden Schaufelteils aufweisen und an der für die Verbindung mit der freien Stirnseite des Schaufelstumpfes vorgesehenen Seite des neuen Schaufelteils über ein einstückig angeformtes Fixierungsmittel verfügen. Mit Hilfe des Fixierungsmittels wird das neue Schaufelteil unter Bildung eines Schweißspaltes lagerichtig an dem Schaufelfuß verklemmt und anschließend maschinell mit diesem verschweißt. Später wird das angeformte Fixierungsmittel durch maschinelle spanende oder nichtspanende Bearbeitung wieder entfernt.

Das vorgeschlagene Reparaturverfahren ist aufgrund vorgefertigter, standardisierter und auf einfache Weise verklemmbarer Reparatur-Schaufelteile zum einen effektiv und kostengünstig und gewährleistet aufgrund der standardisierten Vorfertigung und der Herstellung der Verbindung in der schwingungsfreien Knotenlinie zudem eine lange Lebensdauer der reparierten BLISK bzw. BLISK-Trommel. Auch während der Bearbeitung ist das dünnwandige Schaufelblatt aufgrund der Versteifungsfunktion des Fixierungsmittel mechanisch nur unerheblich belastet. Aus den zuvor erwähnten Gründen ist auch der für die nach der Reparatur der BLISK erforderliche Prüfaufwand gegenüber den bekannten Verfahren deutlich vermindert.

Das oben beschriebene Reparaturverfahren kann sinngemäß auch für die Neuherstellung von ein- oder mehrstufigen BLISK effektiv angewendet werden, indem zunächst lediglich Scheiben mit angeformten Schaufelstümpfen hergestellt werden, deren stirnseitige Schweißverbindungsfläche im Bereich einer schwingungsfreien Knotenlinie des gesamten Schaufelblattes liegt. Diese Schaufelstümpfe werden dann in der oben beschriebenen Weise mit den standardisierten vorgefertigten (Reparatur-)Schaufelteilen, wie sie gleichermaßen für die Schaufelreparatur eingesetzt werden können, verbunden.

Die Reparatur-Schaufelteile (bzw. die für die Neufertigung von BLISKs verwendeten, in gleicher Weise ausgebildeten Montage-Schaufelteile) bestehen aus einem neuen, mit dem abgeschnittenen (oder noch fehlenden) Schaufelteil in Form und Größe identischen Schaufelteil, an dessen mit dem Schaufelstumpf zu verbindender Seite eine stabile Fixierleiste *mit seitlich angeformten Haltestegen* zum Verklemmen und Stabilisieren des neuen Schaufelteils *und zum Abschirmen benachbarter Schaufeln ausgebildet* ist. Mit dieser Fixierleiste ist das neue Schaufelteil während der weiteren Bearbeitung durch Schweißen und Fräsen formschlüssig und positionsgenau am Schaufelstumpf gehalten, so dass eine maschinelle Bearbeitung durchgeführt werden kann.

Ein Ausführungsbeispiel der Erfindung wird anhand der Zeichnung näher erläutert. Es zeigen:

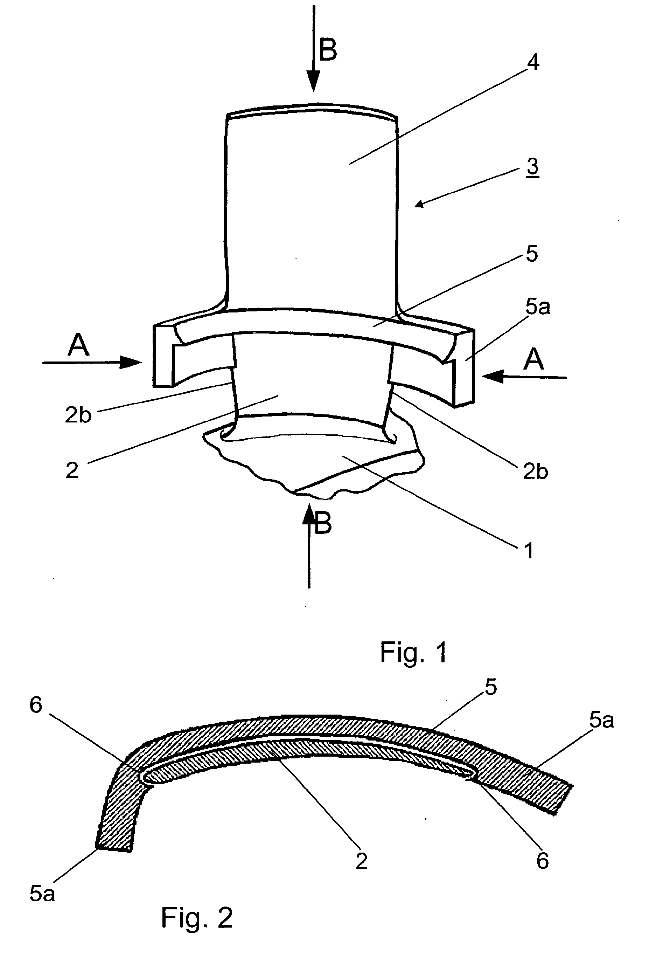

- Fig. 1: eine perspektivische Darstellung eines auf einen Schaufelstumpf einer BLISK aufgesteckten Reparatur- Schaufelteils;
- Fig. 2: eine Schnittansicht längs der Linie AA in Fig. 1;
- Fig. 3: eine Schnittansicht längs der Linie BB in Fig. 1; und
- Fig. 4: eine Ansicht gemäß Fig. 3, jedoch mit winklig angeordneter Schweißnaht.

Gemäß dem vorliegenden Reparaturverfahren werden bei einer beispielsweise für einen Verdichter eingesetzten ein- oder mehrstufigen BLISK die verschlissenen oder beschädigten Schaufelteile über die gesamte Breite der Schaufel bis auf einen an der Scheibe 1 der BLISK verbleibenden, einstückig mit dieser verbundenen Schaufelstumpf 2 abgetrennt. An den der jeweiligen Verdichterstufe zugeordneten Schaufeln wurden zunächst Schwingungsuntersuchungen durchgeführt, um für den betreffenden Schaufeltyp den über die Schaufelbreite verlaufenden Bereich mit den geringsten Schwingungen zu ermitteln. Es wurde festgestellt, dass die Knotenlinien für geringe Schwingungen und damit geringe Werkstoffbelastung unter anderem in einem geringfügig oberhalb des Schaufelfußes liegenden, im Wesentlichen über die gesamte Schaufelbreite verlaufenden Bereich verlaufen. In eben diesem Bereich wird die beschädigte Schaufel abgetrennt und liegt die freie, für eine nachfolgende Schweißverbindung vorgesehene Kante des verbleibenden Schaufelstumpfes 2. Es versteht sich, dass bei einer mehrstufigen BLISK (BLISK-Trommel) mit in den einzelnen Stufen unterschiedlichen Schaufeln auch die Stumpfhöhe unterschiedlich sein kann. Gleichermaßen ist es denkbar, dass bei ein- und denselben Schaufeln, insbesondere bei langen Schaufeln, die Trennebene entsprechend der Beschädigung - bezogen auf den Schaufelfuß - auch in unterschiedlicher Höhe, jedoch immer in einem schwingungsarmen Bereich - liegen kann.

Nach dem Abtrennen des eine Beschädigung aufweisenden oberen Schaufelteils in dem bei übereinstimmenden Schaufeln immer gleichen Schaufelbereich wird auf die betreffenden Schaufelstümpfe 2 ein entsprechend den Schaufeln der jeweiligen Verdichterstufe ausgebildetes, standardisiertes Reparatur-Schaufelteil 3 aufgesteckt. Das jeweilige Reparatur-Schaufelteil 3 ist so ausgebildet, dass es ohne zusätzliche Werkzeuge an dem zugehörigen Schaufelstumpf 2 verklemmt und somit für den nachfolgenden Schweißvorgang lagerichtig positioniert und fixiert werden kann. Das Reparatur-Schaufelteil 3 wird weiter unten näher beschrieben. In dem zwischen der Schnittfläche des Schaufelstumpfes 2 und der gegenüberliegenden Stirnfläche des Reparatur-Schaufelteils 3 verbleibenden Schweißspalt 7 wird durch Laserschweißen eine Schweißnaht erzeugt, die das Reparatur-Schaufelteil 3 fest mit dem Schaufelstumpf 2 verbindet. Die neu aufgebaute Schaufel wird anschließend spangebend bearbeitet. Da die Schweißnaht entlang einer Linie mit geringem Schwingungsanteil verläuft, ist die Verbindungsstelle nur gering belastet. Es besteht somit nicht die Gefahr einer Beschädigung der reparierten Schaufel in diesem an und für sich schwächsten Schaufelbereich. Aus diesem Grund kann das vorliegende Verfahren - in sinngemäß abgewandelter Form - gleichermaßen und vorteilhaft auch bei der Neuherstellung von BLISKs angewendet werden.

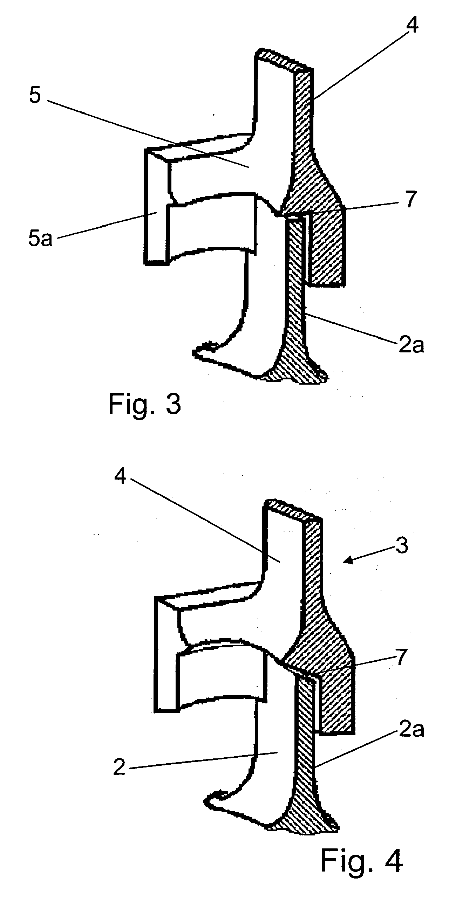

Das Reparatur-Schaufelteil 3 besteht aus dem neuen Schaufeloberteil 4, das in Form und Größe dem abgetrennten, beschädigten und zu ersetzenden Schaufelteil entspricht, und einer als Reparaturhilfsmittel dienenden Fixierleiste 5, die an der Rückseite 2a des Schaufelstumpfes 2 anliegt und seitlich über die Längsseiten des neuen Schaufeloberteils 4 hinausragt. In Höhe der Längsseiten 2b des Schaufelstumpfes 2 weist die Fixierleiste 5 jeweils eine Ausnehmung 6 auf, mit der diese den Schaufelstumpf 2 an dessen Längsseiten 2b umfasst. Mit Hilfe der an der Rückseite 2a des Schaufelstumpfes 2 anliegenden und dessen Längsseiten 2b teilweise umfassenden Fixierleiste 5 wird das neue Schaufeloberteil 4 mit seiner Stirnseite lagerichtig auf dem Schaufelstumpf 2 fixiert. Die stabil ausgeführte Fixierleiste 5 dient zum anderen der Stabilisierung des dünnen neuen Schaufeloberteils 4 während der anschließenden Bearbeitung, während die seitlich überstehenden freien Haltestege 5a der Fixierleiste 5 zur Fixierung in der jeweiligen Bearbeitungsvorrichtung (Schweißen, Fräsen) vorgesehen ist und den Vorrichtungs-, Montage-, und Demontageaufwand erheblich minimiert. Eine weitere wichtige Funktion der Haltestege 5a besteht im Schutz sowohl der vorfolgenden Schaufelreihe als auch der jeweils benachbarten Schaufeln beim Laserschweißen, indem die angrenzenden Schaufeln durch die Haltestege 5a gegenüber der schädigenden Wirkung ein- und austretender Laserstrahlen abgeschirmt werden. Die Mehrfachfunktion der Haltestege 5a trägt zudem zur Fehlerminimierung bei, da die Abschirmung nicht vergessen werden kann. Die Auflagefläche an den zur Herstellung der Schweißverbindung bzw. Bildung des Schweißspaltes bestimmten Stirnseiten kann gerade oder - wie Fig. 4 zeigt - schräg ausgebildet sein. Die winklige Anordnung des Schweißspaltes 7 erleichtert bei einer BLISK-Trommel mit in geringem Abstand angeordneten Schaufeln bzw. Schaufelstufen den Zugang zum Schweißspalt beim Laserschweißen. Nachdem das Reparatur-Schaufelteil 3 mit dem Schaufelstumpf 2 verbunden ist, wird die Fixierleiste 5 durch spanende oder nichtspanende Bearbeitung (in einem Fräsvorgang) entfernt.

### Bezugszeichenliste

- 1: Scheibe
- 2: Schaufelstumpf
- 2a: Rückseite v. 2
- 2b: Längsseiten v. 2
- 3: Reparatur-Schaufelteil
- 4: Neues Schaufeloberteil
- 5: Fixierleiste
- 5a: freie Haltestege v. 5
- 6: Ausnehmungen in 5
- 7: Schweißspalt

## Patentansprüche

1. Verfahren zur BLISK-Reparatur, bei dem der beschädigte Schaufelabschnitt abgetrennt und mittels Schweißverbindung durch ein neues Schaufelteil in entsprechender Form und Größe ersetzt wird, **dadurch gekennzeichnet, dass** die beschädigten Schaufelblätter jeweils an ein- und derselben oberhalb des Schaufelfußes vorhandenen schaufeltypischen Knotenlinie geringer Schwingungen über die gesamte Schaufelbreite bis auf einen Schaufelstumpf (2) abgeschnitten werden und eine Mehrzahl identischer Reparatur-Schaufelteile (3) mit an deren Verbindungskante angeformtem Fixierungsmittel bereitgestellt wird, wobei die Reparatur-Schaufelteile mit Hilfe des Fixierungsmittels lagerichtig an den verbliebenen Schaufelstümpfen (2) verklemmt und anschließend mit diesen verschweißt werden und danach das jeweilige Fixierungsmittel spangebend oder nichtspanend abgetragen wird.

2. Verfahren nach Anspruch 1, **dadurch gekennzeichnet, dass** das Abtrennen der beschädigten Schaufelblätter in Abhängigkeit von der Schaufellänge in einem vom Schaufelfuß mehr oder weniger weit entfernten Bereich erfolgt, wobei bei einer langen Schaufel im Bereich einer vom Schaufelfuß weiter entfernten Knotenlinie abgetrennt wird.

3. Reparatur-Schaufelteil zur Durchführung des Verfahrens nach Anspruch 1, bestehend aus einem neuen, mit dem abgeschnittenen beschädigten Schaufelteil in Form und Größe identischen Schaufeloberteil (4), an dessen unterer mit dem Schaufelstumpf (2) zu verbindender Seite eine stabile sich an der Rückseite des Schaufelstumpfes (2) abstützende Fixierleiste (5) angeformt ist, **dadurch gekennzeichnet, dass**
- die Fixierleiste (5) in Höhe der Längsseiten des neuen Schaufeloberteils (4) in Schaufel-Längsrichtung verlaufende Ausnehmungen (6) aufweist, über die das stirnseitig am Schaufelstumpf (2) liegende Reparatur-Schaufelteil (3) am Schaufelstumpf (2) verklemmbar ist, und dass
- an der Fixierleiste (5) sich über die Längsseiten des Reparatur-Schaufelteils (3) hinaus erstreckende freie Haltestege (5a) zur formschlüssigen Fixierung des Reparatur-Schaufelteils und zur Abschirmung benachbarter Schaufeln vor schädlichen Laserstrahlen angeformt sind.

4. Reparatur-Schaufelteil nach Anspruch 3, **dadurch gekennzeichnet, dass** der Schaufelstumpf (2) und das Reparatur-Schaufelteil (3) schräg verlaufende Schweißverbindungsflächen zur Ausbildung eines das Einbringen eines Schweißmaterials erleichternden schräg gerichteten Schweißspaltes(7) aufweisen.

5. Anwendung des Reparatur-Schaufelteils nach einem der Ansprüche 3 bis 5 zur Neuherstellung einer BLISK oder BLISK-Trommel, indem eine Scheibe (1) einstückig mit Schaufelstümpfen (2) geformt wird, deren Stirnflächen im Bereich einer schwingungsarmen Knotenlinie des zu erstellenden Schaufelblattes liegen, und die bereitgestellten standardisierten Reparatur-Schaufelteile (3) lagerichtig mit den Schaufelstümpfen (2) verklemmt, anschließend verschweißt und der Verbindungsbereich einschließlich der am Reparatur-Schaufelteil angeformten Fixierleiste (5) danach spanend oder nichtspanend bearbeitet wird.

## Claims

1. Method for the repair of BLISKS in which the damaged blade section is removed and replaced by a new blade portion of corresponding shape and size by welding, **characterized in that** the damaged airfoils are each cut off over the entire blade width along one and the same blade-specific nodal line of low vibration existing above the blade root, except for a blade stump (2), and **in that** a plurality of identical blade repair elements (3) with integral fixation means (5) formed onto their joining edge is provided, with the blade repair elements being accurately clamped in position on the remaining blade stumps (2) by means of the fixation means and subsequently welded to the blade stumps (2), and with the respective fixation means being subsequently removed in a cutting or non-cutting process.

2. Method in accordance with Claim 1, **characterized in that** the damaged airfoils are cut off in an area whose distance to the blade root depends on the blade length, with long blades being cut off in the area of a nodal line which is further away from the blade root.

3. Blade repair element for the performance of the method in accordance with Claim 1, including a new blade top portion (4) which is identical in shape and size with the cut-off, damaged blade section, and at whose bottom end, which is to be connected to the blade stump (2), a rigid ledge (5) is formed on, this ledge (5) locating against the rear of the blade stump (2), **characterized in that**
- the ledge (5) features recesses (6) extending in the blade longitudinal direction at the level of the longitudinal sides of the new blade top portion (4) and enabling the blade repair element (3) located on the end face of the blade stump (2) to be clamped to the blade stump (2), and that
- free retaining nibs (5a) extending beyond the longitudinal sides of the blade repair element (3) are formed onto the ledge (5) for positive fixation of the blade repair element (3) and for shielding adjacent blades against detrimental laser radiation.

4. Blade repair element in accordance with Claim 3, **characterized in that** the blade stump (2) and the blade repair element (3) feature inclined weld joining surfaces to produce an inclined welding gap (7) facilitating deposition of weld filler.

5. Application of the blade repair element in accordance with one of the Claims 3 to 5 for the new manufacture of a BLISK or BLISK drum, in that a disk (1) forms one-piece with blade stumps (2) whose end faces lie in the area of a low-vibration nodal line of the airfoil to be produced, and the standardized blade repair elements (3) provided are accurately clamped and then welded onto the blade stumps (2), and the joint, including the ledge (5) formed on the blade repair element, is then subjected to a cutting or non-cutting process.

## Revendications

1. Procédé de réparation de BLISK, dans lequel la section d'aube endommagée est détachée et remplacée au moyen d'un assemblage par soudure par une nouvelle partie d'aube ayant une forme et une taille correspondante, **caractérisé en ce qu'**en laissant un moignon d'aube (2), les pales endommagées sont découpées sur toute la largeur de l'aube en suivant une seule et même ligne nodale peu sujette aux vibrations typique d'une aube et existante au-dessus du pied d'aube, et qu'est mis à disposition une pluralité de parties d'aube de réparation (3) identiques avec un moyen de fixation (5) intégral formé sur leur bord d'assemblage, sachant que les parties d'aube de réparation sont calées en position correcte à l'aide du moyen de fixation sur les moignons d'aube (2) restants puis soudées à ces derniers, et qu'ensuite chaque moyen de fixation est détaché par enlèvement de copeaux ou sans enlèvement de copeaux.

2. Procédé selon la revendication n° 1, **caractérisé en ce qu'**en fonction de la longueur d'aube, le détachement des pales endommagées est effectué dans une zone plus ou moins éloignée du pied d'aube, sachant qu'en présence d'une aube longue, le détachement est effectué dans la zone d'une ligne nodale plus éloignée du pied d'aube.

3. Partie d'aube de réparation pour réaliser le procédé selon la revendication n° 1, constituée d'une nouvelle partie supérieure d'aube (4) identique en forme et en taille à la partie d'aube endommagée découpée, et sur la face inférieure de laquelle destinée à être assemblée au moignon d'aube (2) est formée une nervure de fixation (5) stable s'appuyant sur la face arrière du moignon d'aube (2), **caractérisée en ce**
- **qu'**à la hauteur des côtés longitudinaux de la nouvelle partie supérieure d'aube (4), la nervure de fixation (5) présente des évidements (6) s'étendant dans le sens longitudinal de l'aube et au moyen desquels la partie d'aube de réparation (3) s'appuyant sur la face avant du moignon d'aube (2) peut être calée sur le moignon d'aube (2), et que
- sur la nervure de fixation (5) sont formées des brides de maintien libres (5a) s'étendant au-delà des côtés longitudinaux de la partie d'aube de réparation (3) et destinées à fixer par complémentarité de forme la partie d'aube de réparation (3) et à protéger des aubes voisines contre des rayons laser nocifs.

4. Partie d'aube de réparation selon la revendication n° 3, **caractérisée en ce que** le moignon d'aube (2) et la partie d'aube de réparation (3) présentent des surfaces d'assemblage par soudure inclinées destinées à former une fente de soudage (7) inclinée facilitant l'apport d'une matière de soudage.

5. Mise en oeuvre de la partie d'aube de réparation selon l'une des revendications 3 à 5 pour la reconstitution d'un BLISK ou d'un tambour BLISK, dans laquelle est formé un disque (1) en une seule pièce avec des moignons d'aube (2) dont les faces frontales sont situées dans la zone d'une ligne nodale peu sujette aux vibrations de la pale à façonner, et les parties d'aube de réparation (3) normalisées mises à disposition sont calées en position correcte sur les moignons d'aube (2), puis soudées, et la zone d'assemblage y compris la nervure de fixation (5) formée sur la partie d'aube de réparation est usinée par enlèvement de copeaux ou sans enlèvement de copeaux.
